# EUROPEAN PATENT SPECIFICATION

(11) **EP 3 817 103 B1**
(45) Date of publication and mention of the grant of the patent: **21.08.2024**
(21) Application number: 19881633.2
(22) Date of filing: 29.10.2019
(51) Int. Cl.: H01M 4/133, H01M 4/36, H01M 4/58, H01M 4/1393, H01M 4/04, H01M 10/052, H01M 4/38, H01M 4/587, H01M 4/66, H01M 4/62

(54) **POSITIVE ELECTRODE ACTIVE MATERIAL FOR LITHIUM RECHARGEABLE BATTERY, MANUFACTURING METHOD THEREFOR AND LITHIUM RECHARGEABLE BATTERY COMPRISING SAME**
POSITIVELEKTRODENAKTIVMATERIAL FÜR EINE AUFLADBARE LITHIUMBATTERIE, HERSTELLUNGSVERFAHREN DAFÜR UND AUFLADBARE LITHIUMBATTERIE DAMIT
SUBSTANCE ACTIVE D'ÉLECTRODE POSITIVE POUR PILE RECHARGEABLE AU LITHIUM, SON PROCÉDÉ DE FABRICATION ET PILE RECHARGEABLE AU LITHIUM LA COMPRENANT

(30) Priority: 08.11.2018 KR 20180136482; 25.10.2019 KR 20190133909
(43) Date of publication of application: 05.05.2021
(73) Proprietor: LG Energy Solution, Ltd., Seoul 07335 (KR)
(72) Inventor: LEE, Cholong, Daejeon 34122 (KR); KIM, Yun Kyoung, Daejeon 34122 (KR)
(74) Representative: Hoffmann Eitle
(86) International application number: PCT/KR2019/014328
(87) International publication number: WO 2020/096253

(56) References cited:
- CN-A- 104 600 265
- CN-A- 106 207 097
- KR-A- 20150 142 832
- KR-A- 20160 051 610
- KR-A- 20170 139 761
- KR-A- 20180 017 975

## Description

### [Technical Field]

The present invention relates to a positive electrode active material for a lithium secondary battery, a preparation method thereof and a lithium secondary battery comprising the same, more particularly, to a positive electrode active material for a lithium secondary battery, which can improve the performance of the battery by mixing various carbons with positive electrode active material and applying it, and a preparation method thereof, and a lithium secondary battery comprising the same.

### [Background Art]

As the interest in energy storage technology is increases, the field of application thereof has extended to the energy of mobile phones, tablets, laptops, and camcorders, and further to electric vehicles (EVs) and hybrid electric vehicles (HEVs), and thus the research and development of electrochemical devices for energy storage is steadily increasing. The electrochemical devices are the field that is receiving the most attention in this respect, and among them, the development of lithium-based secondary battery such as lithium-sulfur battery that is capable of charging/discharging has become a focus of attention. In recent years, in order to improve capacity density and specific energy in developing such a battery, research and development of new electrodes and batteries have been conducted.

A lithium-sulfur (Li-S) battery among these electrochemical devices, especially lithium secondary batteries, has high energy density, and thus is attracting attention as a next-generation secondary battery that can replace lithium ion batteries. In such a lithium-sulfur battery, a reduction reaction of sulfur and an oxidation reaction of lithium metal occur during discharging. At this time, sulfur forms linear lithium polysulfides (Li₂S₂, Li₂S₄, Li₂S₆, Li₂S₈) from S₈ of the ring structure. The lithium-sulfur battery has a characteristic of indicating a stepwise discharging voltage until the polysulfide (PS) is completely reduced to Li₂S.

In this lithium-sulfur battery, the sulfur positive electrode is non-conductive, and most of the positive electrode material is prepared by mixing sulfur, which contributes to the electrochemical reaction, with a conductive carbon-based material which is a carrier thereof. At this time, the reactivity of sulfur, high rate characteristic, lifetime characteristic and the like are affected depending on the carbonaceous material used. However, in the case of lithium-sulfur battery, since Li₂S which is the final reaction product changes the electrode structure due to the increase in volume compared to S, and polysulfide which is the intermediate product is easily dissolved in the electrolyte, the polysulfide is continuously dissolved out during the discharging reaction, thereby reducing the amount of the positive electrode active material. As a result, the deterioration of the battery is accelerated and the reactivity and lifetime characteristics of the battery are inevitably reduced. In order to solve these problems, although technologies for modifying the surface of carbon have been developed, since there are difficulties in that a long and complicated process, such as heat treatment, must be involved, or the degree of reduction in leaching of polysulfide is insufficient, so far, there is no specific solution. Therefore, there is a need for a sulfur carrier capable of optimizing factors such as shape, size, and conductivity that affect the performance of the battery.

CN 104600265 B discloses an anode carbon-sulfur composite material composed of carbon materials of different shapes and elemental sulfur, wherein the carbon materials include one or more of linear carbon material, planar carbon material and point-like carbon material.

### [Disclosure]

### [Technical Problem]

Accordingly, it is an object of the present invention to provide a positive electrode active material for a lithium secondary battery, which can improve the performance of the battery by mixing various carbons with positive electrode active material and applying it, a preparation method thereof, and a lithium secondary battery comprising the same.

### [Technical Solution]

In order to achieve the above object, the present invention provides a positive electrode active material for a lithium secondary battery comprising two or more types of active material composites in which sulfur is supported on the carbon materials contained therein, wherein the carbon materials contained in any one of the two or more types of active material composites differ in at least one of the average particle size and shape from the carbon materials contained in another type of active material composites wherein the carbon material is carbon nanotube, and its shape is an entangle type in which carbon nanotubes are entangled to form a spherical shape or a bundle type in which carbon nanotubes are aligned in a predetermined direction to form a skein of elongated shape, and wherein the carbon nanotubes having the entangle type comprise particles having an aspect ratio of 1 to 2, and the carbon nanotubes having the bundle type comprise particles having an aspect ratio of greater than 2.

In addition, the present invention provides a method for preparing a positive electrode active material for a lithium secondary battery comprising the steps of (a) mixing and reacting each of two or more types of carbon materials having at least one of an average particle size and a shape different from each other with sulfur to prepare two or more types of active material composites in which sulfur is supported on each of the carbon materials contained therein; and (b) mixing the prepared two or more types of active material composites wherein the carbon material is carbon nanotube, and its shape is an entangle type in which carbon nanotubes are entangled to form a spherical shape or a bundle type in which carbon nanotubes are aligned in a predetermined direction to form a skein of elongated shape, and wherein the carbon nanotubes having the entangle type comprise particles having an aspect ratio of 1 to 2, and the carbon nanotubes having the bundle type comprise particles having an aspect ratio of greater than 2.

In addition, the present invention provides a lithium secondary battery comprising the above positive electrode comprising the positive electrode active material for the lithium secondary battery; a lithium-based negative electrode; an electrolyte interposed between the positive electrode and the negative electrode; and a separator.

### [Advantageous Effects]

According to the positive electrode active material for the lithium secondary battery according to the present invention, the preparation method thereof, and the lithium secondary battery comprising the same, there is an advantage of improving the performance such as the lifetime characteristic of the battery by mixing and applying various carbons as positive electrode active materials.

### [Description of Drawings]

FIG. 1 is a graph comparing and contrasting the lifetime characteristics of lithium-sulfur batteries according to the examples of the present invention and lithium-sulfur batteries according to the comparative examples.
FIG. 2 is a graph comparing and contrasting the charging profiles of lithium-sulfur batteries according to the examples of the present invention and lithium-sulfur batteries according to the comparative examples.

### [Best Mode]

Hereinafter, the present invention will be described in detail.

The positive electrode active material for the lithium secondary battery according to the present invention contains two or more types of active material composites in which sulfur is supported on the carbon materials contained therein, and is characterized in that the carbon materials contained in any one of the two or more types of active material composites differ in at least one of the average particle size and shape from the carbon materials contained in another type of active material composites.

The applicant of the present invention has improved the lifetime characteristic by using two or more types of carbon materials with different particle sizes and shapes as carbon materials which are applied as a sulfur carrier for a lithium secondary battery, especially for a lithium-sulfur battery, and thus applying the sulfur carrier mixed with the advantages expressed from each carbon material to the lithium secondary battery.

The active material composites are those in which sulfur is supported on the carbon materials contained therein, that is, which contain sulfur and carbon materials, and the active material composites may be used without limitation as long as they are classified into two or more types. For example, if two types of the active material composites are used, the first active material composite in which sulfur is supported on the first carbon material and the second active material composite in which sulfur is supported on the second carbon material are comprised. If three or more types of the active material composites are used, in addition to the first and second active material composites, the third active material composite may be further comprised. That is, in the present invention, the number of the active material composites is not particularly limited as long as the average particle size and shape of the carbon materials contained in each active material composite are different from each other.

Such active material composites can be mixed in various proportions as a positive electrode active material for a lithium secondary battery. For example, if two types of active material composites are used, the mixing ratio may be 1 : 9 to 9 : 1, and preferably, 2 : 8 to 8 : 2 as a weight ratio. In addition, if three or more types of active material composites are used, they may be applied at an appropriate mixing ratio.

The carbon materials contained in each of the active material composites are to improve conductivity, and the carbon material is carbon nanotube (CNT) having conductivity and pores formed to support sulfur.

As described above, only when each carbon material contained in each active material composite is different from each other in at least one of average particle size and shape, the object of the present invention which is intended to improve the lifetime characteristic of a lithium secondary battery can be achieved. The average particle size of the carbon material is 2 to 200 *µ*m, preferably 5 to 100 *µ*m. If the average particle size of the carbon material is out of the range, a defective electrode coating is caused or a clogging phenomenon of the slurry may occur. If the particle size of each carbon material contained in each of the active material composites is not different from each other, the effect of improving the lifetime characteristic of the battery may be very small or absent.

That is, for example, if the positive electrode active material contains two types of active material composites, the carbon materials contained in any one type of active material composites of two types of active material composites may have an average particle size of 5 to 40 *µ*m and the carbon materials contained in another type of active material composite may have an average particle size of 15 to 90 *µ*m. As another example, if the positive electrode active material contains two types of active material composites, the carbon materials contained in any one type of active material composites of two types of active material composites may have an average particle size of 5 *µ*m or more to no more than 25 *µ*m and the carbon materials contained in another type of active material composites may have an average particle size of 25 *µ*m or more to 90 *µ*m or less.

Additionally, if the positive electrode active material contains two types of active material composites, the difference in average particle size between the carbon materials contained in any one type of active material composites of two types of active material composites and the carbon materials contained in another type of active material composites may be 5 to 65 *µ*m, preferably 15 to 45 *µ*m, more preferably 25 to 35 *µ*m. If the difference in average particle size between the two carbon materials is less than 5 *µ*m, there may be difficulties in maximizing the benefit from the difference in the average particle size. If the difference exceeds 65 *µ*m, there may be no further substantial benefit.

In addition, if the positive electrode active material contains two types of active material composites, the weight ratio of the carbon materials having a relatively large average particle size contained in one type of active material composites among the two types of active material composites, and the carbon materials having a relatively small average particle size contained in another type of active material composites may be 1 : 1 to 4 : 1, preferably 2 : 1 to 4 : 1.

In the case of the shape of the carbon material, where homogeneous carbon materials are used and their particle sizes are also the same, only when the shapes between the carbon materials are necessarily different, the lifetime characteristic of the battery can be improved. In that case, referring to the shape of the carbon nanotubes (CNT) of the carbon materials, the shape of the CNT is classified into an entangle type in which CNTs are entangled to form a spherical shape, and a bundle type in which CNTs are aligned in a predetermined direction to form a skein of elongated shape. The entangle type has advantages in terms of improvement of overvoltage or capacity expression, and comprises particles having an aspect ratio of 1 to 2. In addition, the bundle type is effective in improving high rate characteristics and decomposing reaction by-products, and comprises particles having an aspect ratio of more than 2. Therefore, it is desirable to configure each carbon material in each active material composite differently in shape from each other, so as to have all of these advantages.

Taken together, only when one or more of the average particle size and shape between the carbon materials differs, is consistent with the intent of the present invention. Meanwhile, pores in which sulfur is supported are formed on the surface of the carbon material. In this case, the pore volume of the carbon material may be 0.5 to 5 cm³.

Next, a method of preparing a positive electrode active material for a lithium secondary battery according to the present invention will be described. The method of preparing a positive electrode active material for a lithium secondary battery comprises the steps of (a) mixing and reacting each of two or more types of carbon materials having at least one of an average particle size and a shape different from each other with sulfur to prepare two or more types of active material composites in which sulfur is supported on each of the carbon materials and (b) mixing the prepared two or more types of active material composites.

In step (a), the active material composites comprise carbon materials in which at least one of their average particle size and shape is different from each other, and they can be prepared in two or more types. For example, when two types of active material composites are prepared, the first active material composite may be prepared by mixing and reacting sulfur and the first carbon material, and then the second active material composite may be prepared by mixing and reacting sulfur and the second carbon material. Each active material composite may be prepared at the same time depending on the process environment, and there is no particular limitation on the number of active material composites or the preparation order (However, the number of active material composites to be manufactured should be two or more). At this time, there is no particular limitation on the mixing ratio of sulfur and carbon material contained in each active material composite.

In step (a), the reaction may be carried out for 5 to 60 minutes, preferably 20 to 40 minutes at a temperature of 120 to 200 °C, preferably 150 to 180 °C. In addition, the definition of the carbon material or the description about the average particle size and shape thereof is as described above.

In the step (b), the prepared active material composites may be mixed in various ratios as a positive electrode active material for a lithium secondary battery. For example, if two types of active material composites are used, the mixing ratio may be 1 : 9 to 9 : 1, and preferably 2 : 8 to 8 : 2 as weight ratio. In addition, if 3 or more types of active material composites are used, they can be applied at an appropriate mixing ratio within the range without departing from the intent of the present invention. Meanwhile, the active material composites to be mixed in step (b) is preferably in the form of a slurry, but there is no particular limitation on the mixed form, as long as it does not depart from the scope of the present invention, and also the mixed forms commonly used in the art may be mutatis mutandis.

Finally, referring to the lithium secondary battery comprising the positive electrode active material for the lithium secondary battery, the lithium secondary battery comprises the above positive electrode comprising the positive electrode active material for the lithium secondary battery; a lithium-based negative electrode; an electrolyte interposed between the positive electrode and the negative electrode; and a separator.

In that case, the content of the positive electrode active material may be 50 to 95 parts by weight, preferably 60 to 90 parts by weight relative to 100 parts by weight of the positive electrode. If the content of the positive electrode active material is less than 50 parts by weight relative to the total weight of 100 parts by weight of the positive electrode, electrochemical characteristics of the battery by the positive electrode active material may be deteriorated. If the content of the positive electrode active material exceeds 95 parts by weight, additional components such as a binder and an electrically conductive material may be comprised in a small amount, thus making it difficult to manufacture an efficient battery. In addition, the lithium secondary battery according to the present invention may be a lithium-based secondary battery such as a lithium-sulfur battery, a lithium metal battery, and a lithium air battery, but the lithium-sulfur battery may best meet the intent of the present invention.

Meanwhile, the general configuration of the positive electrode except for the positive electrode active material, the negative electrode, the electrolyte, and the separator may be conventional ones used in the art, and a detailed description thereof will be described below.

The positive electrode included in the lithium secondary battery of the present invention further includes a binder and an electrically conductive material in addition to the above positive electrode active material. The binder is a component that assists in the adhesive strength between a positive electrode active material and an electrically conductive material and the bonding to a current collector, and for example, may be, but is not limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight, the adhesive strength between the positive electrode active material and the current collector may be insufficient. If the content of the binder is more than 50 parts by weight, the adhesive strength is improved but the content of the positive electrode active material may be reduced, thereby lowering the capacity of the battery.

The electrically conductive material comprised in the positive electrode is not particularly limited as long as it does not cause side reactions in the internal environment of the battery and does not cause chemical changes in the battery but has excellent electrical conductivity. The electrically conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, preferably 1 to 30 parts by weight based on 100 parts by weight of total weight of the positive electrode. If the content of electrically conductive material is too low, that is, if it is less than 0.5 parts by weight, it is difficult to obtain an effect on the improvement of the electrical conductivity, or the electrochemical characteristics of the battery may be deteriorated. If the content of the electrically conductive material exceeds 50 parts by weight, that is, if it is too much, the amount of positive electrode active material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode active material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode of the present invention. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

The negative electrode may be manufactured according to a conventional method known in the art. For example, the negative electrode active material, the electrically conductive material, the binder, and if required the filler and the like are dispersed and mixed in a dispersion medium (solvent) to form a slurry, and the slurry can be applied onto the negative electrode current collector, followed by drying and rolling it to prepare a negative electrode. The negative electrode active material may be a lithium metal or a lithium alloy (for example, an alloy of lithium and a metal such as aluminum, zinc, bismuth, cadmium, antimony, silicon, lead, tin, gallium or indium). The negative electrode current collector may be, but is not limited to, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), or an alloy thereof, or copper (Cu) or stainless steel whose surface was treated with carbon (C), nickel (Ni), titanium (Ti) or silver (Ag) or so on. The shape of the negative electrode current collector may be in the form of a foil, film, sheet, punched form, porous body, foam or the like.

The separator is interposed between the positive electrode and the negative electrode and prevents a short circuit therebetween and serves as a pathway for lithium ions. Olefin-based polymers such as polyethylene and polypropylene, glass fibers or the like may be used in the form of sheets, multilayers, microporous films, woven fabrics, nonwoven fabrics or the like as the separator, but the present invention is not limited thereto. Meanwhile, if a solid electrolyte (e.g., an organic solid electrolyte, an inorganic solid electrolyte, etc.) such as a polymer is used as the electrolyte, the solid electrolyte may also serve as a separator. Specifically, an insulating thin film with high ion permeability and mechanical strength is used. The pore diameter of the separator is generally in the range of 0.01 to 10 *µ*m, and the thickness may generally be in the range of 5 to 300 *µ*m.

As the electrolyte or the electrolyte solution which is a non-aqueous electrolyte solution (non-aqueous organic solvent), carbonate, ester, ether, or ketone may be used alone or in combination of two or more thereof, but is not limited thereto. For example, an aprotic organic solvent, such as dimethyl carbonate, diethyl carbonate, dipropyl carbonate, methyl propyl carbonate, ethyl propyl carbonate, methyl ethyl carbonate, ethylene carbonate, propylene carbonate, butylene carbonate, γ-butyrolactone, n-methyl acetate, n-ethyl acetate, n-propyl acetate, phosphoric acid triester, dibutyl ether, N-methyl-2-pyrrolidinone, 1,2-dimethoxyethane, tetrahydroxy Franc, tetrahydrofuran derivatives such as 2-methyltetrahydrofuran, dimethyl sulfoxide, formamide, dimethylformamide, dioxolane and derivatives thereof, acetonitrile, nitromethane, methyl formate, methyl acetate, trimethoxymethane, sulfolane, methyl sulfolane, 1,3-dimethyl-2-imidazolidinone, methyl propionate, ethyl propionate and the like can be used, but is not limited thereto.

Lithium salts may be added to the electrolyte solution (so-called non-aqueous electrolyte solution containing lithium salt). The lithium salts may comprise, but not limited to, those known to be favorably soluble in non-aqueous electrolyte solutions, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, (CF₃SO₂)₂NLi, lithium chloroborane, lithium lower aliphatic carboxylate, lithium tetraphenyl borate, or lithium imide, etc. The (non-aqueous) electrolyte solution may further comprise pyridine, triethylphosphite, triethanolamine, cyclic ether, ethylene diamine, n-glyme-based compound, hexamethylphosphoric triamide, nitrobenzene derivatives, sulfur, quinoneimine dyes, N-substituted oxazolidinone, N,N-substituted imidazolidine, ethylene glycol dialkyl ether, ammonium salt, pyrrole, 2-methoxy ethanol, aluminum trichloride or the like, for the purpose of improving charging-discharging characteristics, flame retardancy, and the like. If necessary, halogen-containing solvents such as carbon tetrachloride and ethylene trifluoride may be further added to impart nonflammability, and carbon dioxide gas may be further added to improve the high-temperature conservation characteristic.

Meanwhile, the lithium secondary battery of the present invention can be manufactured by a conventional method in the art. For example, the lithium secondary battery can be manufactured by inserting the porous separator between the positive electrode and the negative electrode, and introducing the non-aqueous electrolyte solution. The lithium secondary battery according to the present invention is not only applicable to a battery cell such as a coin cell used as a power source of a small device but also particularly suitably usable as a unit cell of a battery module which is a power source of a medium and large-sized device. In this respect, the present invention also provides a battery module in which at least two lithium secondary batteries are electrically connected (in series or in parallel). It is needless to say that the number of lithium secondary batteries comprised in the battery module may be variously adjusted in consideration of the use and capacity of the battery module.

In addition, the present invention provides a battery pack in which the battery modules are electrically connected according to a conventional technique in the art. The battery module and the battery pack may be used as a power source for at least one medium and large-sized device selected from power tools; electric cars comprising an electric vehicle (EV), a hybrid electric vehicle (HEV), and a plug-in hybrid electric vehicle (PHEV); electric trucks; electric commercial vehicles; or power storage systems, but the present invention is not limited thereto.

Hereinafter, preferred examples are presented in order to facilitate understanding of the present invention. However, it will be apparent to those skilled in the art that these examples are merely illustrative of the invention as set out in the appended claims.

### [Example 1] Preparation of positive electrode active material

First, sulfur and carbon nanotubes having an entangled shape with an average particle size of 57.27 *µ*m were mixed at a weight ratio of 7.5 : 2.5, and then reacted at 155 °C for 30 minutes to prepare a first active material composite. In addition, sulfur and carbon nanotubes having a bundle shape with an average particle size of 22.59 *µ*m were mixed at a weight ratio of 7.5: 2.5, and reacted at 155 °C for 30 minutes to prepare a second active material composite. Subsequently, the first active material composite and the second active material composite prepared above were, when preparing a slurry, stirred and mixed at a weight ratio of 8 : 2 at a speed of 1,500 rpm, thereby preparing a positive electrode active material.

### [Example 2] Preparation of positive electrode active material

A positive electrode active material was prepared in the same manner as in Example 1, except that the first active material composite and the second active material composite were mixed at a weight ratio of 5 : 5 instead of 8 : 2.

### [Example 3] Preparation of positive electrode active material

A positive electrode active material was prepared in the same manner as in Example 1, except that the first active material composite and the second active material composite were mixed at a weight ratio of 2 : 8 instead of 8 : 2.

### [Comparative Example 1] Preparation of positive electrode active material

Sulfur and carbon nanotubes having an entangled shape with an average particle size of 57.27 *µ*m were mixed at a weight ratio of 7.5 : 2.5, and reacted for 30 minutes at 155 °C to prepare a positive electrode active material (that is, corresponding to the first active material composite in Example 1).

### [Comparative Example 2] Preparation of positive electrode active material

Sulfur and carbon nanotubes having a bundle shape with an average particle size of 22.59 *µ*m were mixed at a weight ratio of 7.5 : 2.5, and reacted for 30 minutes at 155 °C to prepare a positive electrode active material (that is, corresponding to the second active material composite in Example 1).

### [Examples 4~6 and Comparative Examples 3~4] Manufacture of lithium-sulfur battery

### Preparation positive electrode for lithium-sulfur battery

The positive electrode active material prepared in Examples 1 to 3, Comparative Examples 1 and 2, respectively, super-P as an electrically conductive material and polyvinylidene fluoride (PVdF) as a binder were mixed at a weight ratio of 88 : 5 : 7, dispersed in an NMP solvent to prepare a slurry, and then the slurry coated on an aluminum current collector (Al foil) to a thickness of 500 *µ*m, and dried in a vacuum oven at 120 °C for 13 hours to prepare a positive electrode for a lithium-sulfur battery.

### Manufacture of lithium-sulfur battery

The prepared positive electrode was positioned to face a negative electrode (Li metal foil), and then interposed a polyethylene separator therebetween, and then an electrolyte solution in which LiFSI was dissolved at a concentration of 4 M in a dimethyl ether solvent to prepare a lithium-sulfur battery.

### [Experimental Example 1] Evaluation of lifetime characteristic of battery

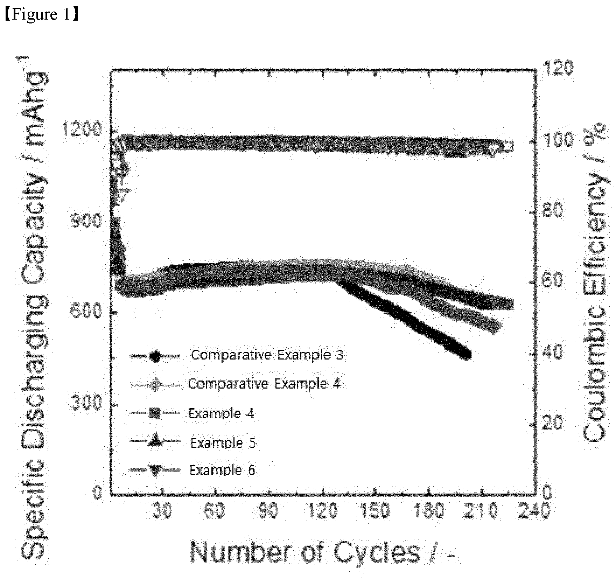

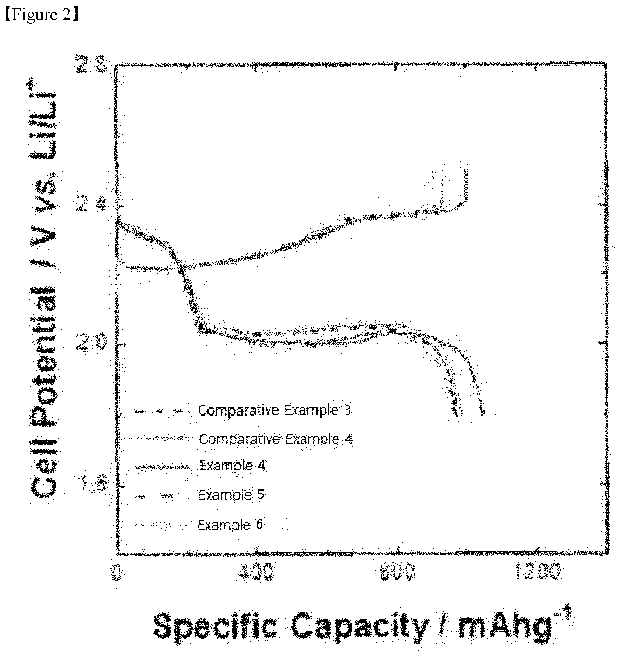

The remaining capacity of the lithium-sulfur batteries prepared in Examples 4 to 6 and Comparative Examples 3 and 4 according to repeated charging and discharging was confirmed to evaluate lifetime characteristic of each lithium-sulfur battery. FIG. 1 is a graph comparing and contrasting the lifetime characteristics of lithium-sulfur batteries according to the examples of the present invention and lithium-sulfur batteries according to the comparative examples. FIG. 2 is a graph comparing and contrasting the charging profiles of lithium-sulfur batteries according to the examples of the present invention and lithium-sulfur batteries according to the comparative examples.

As shown in FIGs. 1 and 2, it was confirmed that the lithium-sulfur batteries (Examples 4 to 6) in which two or more types of active material composites are applied together as a positive electrode active material according to the present invention have improved lifetime characteristics compared to conventional lithium-sulfur batteries (Comparative Examples 3 and 4) in which a single active material composite is applied as a positive electrode active material. In particular, as can be seen from FIG. 2, it was found that the battery prepared in Example 4 has an increased initial discharge capacity compared to the batteries prepared in Comparative Examples 3 and 4. Through this, it can be seen that if a variety of carbon materials are mixed at an appropriate ratio and applied as a sulfur carrier as in the present invention, the performance of the battery such as lifetime characteristic is excellent.

## Claims

1. A positive electrode active material for a lithium secondary battery comprising: two or more types of active material composites in which sulfur is supported on the carbon materials contained therein, wherein the carbon materials contained in any one of the two or more types of active material composites differ in at least one of the average particle size and shape from the carbon materials contained in another type of active material composites,
wherein the carbon material is carbon nanotube, and its shape is an entangle type in which carbon nanotubes are entangled to form a spherical shape or a bundle type in which carbon nanotubes are aligned in a predetermined direction to form a skein of elongated shape, and
wherein the carbon nanotubes having the entangle type comprise particles having an aspect ratio of 1 to 2, and the carbon nanotubes having the bundle type comprise particles having an aspect ratio of greater than 2.

2. The positive electrode active material for the lithium secondary battery according to claim 1, wherein the positive electrode active material contains two types of active material composites, and the two types of active material composites are contained in a weight ratio of 1 : 9 to 9 : 1.

3. The positive electrode active material for the lithium secondary battery according to claim 1, wherein the average particle size of the carbon material is 2 to 200 *µ*m.

4. The positive electrode active material for the lithium secondary battery according to claim 2, wherein the carbon materials contained in any one type of active material composite of two types of active material composites have an average particle size of 5 to 40 *µ*m and the carbon materials contained in another type of active material composites have an average particle size of 15 to 90 *µ*m.

5. The positive electrode active material for the lithium secondary battery according to claim 2, wherein the carbon materials contained in any one type of active material composites of two types of active material composites have an average particle size of 5 *µ*m or more to no more than 25 *µ*m and the carbon materials contained in another type of active material composites have an average particle size of 25 *µ*m or more to 90 *µ*m or less.

6. The positive electrode active material for the lithium secondary battery according to claim 2, wherein the difference in the average particle size between the carbon materials contained in any one type of active material composites of two types of active material composites and the carbon materials contained in another type of active material composites is 5 to 65 *µ*m.

7. A method for preparing a positive electrode active material for a lithium secondary battery comprising the steps of:
(a) mixing and reacting each of two or more types of carbon materials having at least one of an average particle size and a shape different from each other with sulfur to prepare two or more types of active material composites in which sulfur is supported on each of the carbon materials; and
(b) mixing the prepared two or more types of active material composites,
wherein the carbon material is carbon nanotube, and its shape is an entangle type in which carbon nanotubes are entangled to form a spherical shape or a bundle type in which carbon nanotubes are aligned in a predetermined direction to form a skein of elongated shape, and
wherein the carbon nanotubes having the entangle type comprise particles having an aspect ratio of 1 to 2, and the carbon nanotubes having the bundle type comprise particles having an aspect ratio of greater than 2.

8. The method for preparing the positive electrode active material for the lithium secondary battery according to claim 7, wherein the active material composite comprises two types of active material composites, and the two types of active material composites are mixed in a weight ratio of 1 : 9 to 9 : 1.

9. The method for preparing the positive electrode active material for the lithium secondary battery according to claim 7, wherein the reaction is carried out for 5 to 60 minutes at a temperature of 120 to 200 °C

10. A lithium secondary battery comprising: the positive electrode comprising the positive electrode active material for the lithium secondary battery of claim 1; a lithium-based negative electrode; an electrolyte interposed between the positive electrode and the negative electrode; and a separator.

11. The lithium secondary battery according to claim 10, wherein the lithium secondary battery is a lithium-sulfur battery.

## Patentansprüche

1. Aktivmaterial einer positiven Elektrode für eine Lithium-Sekundärbatterie, umfassend:
zwei oder mehr Arten von Aktivmaterial-Verbundstoffen, in welchen Schwefel auf die darin enthaltenen Kohlenstoffmaterialien aufgebracht ist, wobei die in einer beliebigen der zwei oder mehr Arten von Aktivmaterial-Verbundstoffen enthaltenen Kohlenstoffmaterialien sich in mindestens einer der durchschnittlichen Partikelgröße und Form von den in einer anderen Art von Aktivmaterial-Verbundstoffen enthaltenen Kohlenstoffmaterialien unterscheiden,
wobei das Kohlenstoffmaterial Kohlenstoffnanoröhren ist, und seine Form eine verschlungene Art ist, in welcher Kohlenstoffnanoröhren verschlungen sind, um eine sphärische Form zu bilden, oder eine gebündelte Art, in welcher Kohlenstoffnanoröhren in einer vorbestimmten Richtung ausgerichtet sind, um einen Strang von länglicher Form zu bilden, und
wobei die Kohlenstoffnanoröhren der verschlungenen Art Partikel mit einem Seitenverhältnis von 1 bis 2 umfassen, und die Kohlenstoffnanoröhren der gebündelten Art Partikel mit einem Seitenverhältnis von größer als 2 umfassen.

2. Aktivmaterial einer positiven Elektrode für die Lithium-Sekundärbatterie gemäß Anspruch 1, wobei das Aktivmaterial einer positiven Elektrode zwei Arten von Aktivmaterial-Verbundstoffen enthält, und die zwei Arten von Aktivmaterial-Verbundstoffen in einem Gewichtsverhältnis von 1 : 9 bis 9 : 1 enthalten sind.

3. Aktivmaterial einer positiven Elektrode für die Lithium-Sekundärbatterie gemäß Anspruch 1, wobei die durchschnittliche Partikelgröße des Kohlenstoffmaterials 2 bis 200 µm beträgt.

4. Aktivmaterial einer positiven Elektrode für die Lithium-Sekundärbatterie gemäß Anspruch 2, wobei die in einer beliebigen Art von Aktivmaterial-Verbundwerkstoff von zwei Arten von Aktivmaterial-Verbundwerkstoffen enthaltenen Kohlenstoffmaterialien eine durchschnittliche Partikelgröße von 5 bis 40 µm aufweisen und die in einer anderen Art von Aktivmaterial-Verbundwerkstoff enthaltenen Kohlenstoffmaterialien eine durchschnittliche Partikelgröße von 15 bis 90 µm aufweisen.

5. Aktivmaterial einer positiven Elektrode für die Lithium-Sekundärbatterie gemäß Anspruch 2, wobei die in einer beliebigen Art von Aktivmaterial-Verbundwerkstoffen von zwei Arten von Aktivmaterial-Verbundwerkstoffen enthaltenen Kohlenstoffmaterialien eine durchschnittliche Partikelgröße von 5 µm oder mehr bis nicht mehr als 25 µm aufweisen und die in einer anderen Art von Aktivmaterial-Verbundwerkstoffen enthaltenen Kohlenstoffmaterialien eine durchschnittliche Partikelgröße von 25 µm oder mehr bis 90 µm oder weniger aufweisen.

6. Aktivmaterial einer positiven Elektrode für die Lithium-Sekundärbatterie gemäß Anspruch 2, wobei der Unterschied in der durchschnittlichen Partikelgröße zwischen den in einer beliebigen Art von Aktivmaterial-Verbundstoffen von zwei Arten von Aktivmaterial-Verbundstoffen enthaltenen Kohlenstoffmaterialien und den in einer anderen Art von Aktivmaterial-Verbundstoffen enthaltenen Kohlenstoffmaterialien 5 bis 65 µm beträgt.

7. Verfahren zur Herstellung eines Aktivmaterials einer positiven Elektrode für eine Lithium-Sekundärbatterie, umfassend die Schritte:
(a) Mischen und Reagieren jeder von zwei oder mehr Arten von Kohlenstoffmaterialien, die sich mindestens in einer durchschnittlichen Partikelgröße und einer Form voneinander unterscheiden, mit Schwefel, um zwei oder mehr Arten von Aktivmaterial-Verbundstoffen herzustellen, in welchen Schwefel auf jedem der Kohlenstoffmaterialien aufgebracht ist; und
(b) Mischen der hergestellten zwei oder mehr Arten von Aktivmaterial-Verbundstoffen,
wobei das Kohlenstoffmaterial Kohlenstoffnanoröhren ist und seine Form eine verschlungene Art ist, in welcher Kohlenstoffnanoröhren verschlungen sind, um eine sphärische Form zu bilden, oder eine gebündelte Art, in welcher Kohlenstoffnanoröhren in einer vorbestimmten Richtung ausgerichtet sind, um einen Strang von länglicher Form zu bilden, und
wobei die Kohlenstoffnanoröhren der verschlungenen Art Partikel mit einem Seitenverhältnis von 1 bis 2 umfassen, und die Kohlenstoffnanoröhren der gebündelten Art Partikel mit einem Seitenverhältnis von größer als 2 umfassen.

8. Verfahren zur Herstellung des Aktivmaterials einer positiven Elektrode für die Lithium-Sekundärbatterie gemäß Anspruch 7, wobei der Aktivmaterial-Verbundstoff zwei Arten von Aktivmaterial-Verbundstoffen umfasst, und die zwei Arten von Aktivmaterial-Verbundstoffen in einem Gewichtsverhältnis von 1 : 9 bis 9 : 1 gemischt werden.

9. Verfahren zur Herstellung des Aktivmaterials einer positiven Elektrode für die Lithium-Sekundärbatterie gemäß Anspruch 7, wobei die Reaktion für 5 bis 60 Minuten bei einer Temperatur von 120 bis 200 °C durchgeführt wird.

10. Lithium-Sekundärbatterie, umfassend: die positive Elektrode, umfassend das Aktivmaterial einer positiven Elektrode für die Lithium-Sekundärbatterie gemäß Anspruch 1; eine lithiumbasierte negative Elektrode; einen zwischen der positiven Elektrode und der negativen Elektrode angeordneten Elektrolyten; und einen Separator.

11. Lithium-Sekundärbatterie gemäß Anspruch 10, wobei die Lithium-Sekundärbatterie eine Lithium-Schwefel-Batterie ist.

## Revendications

1. Substance active d'électrode positive pour une pile secondaire au lithium comprenant :
deux types ou plus de composites de substance active dans lesquels du soufre est supporté sur les matériaux de carbone contenus dans ceux-ci,
dans lequel les matériaux de carbone contenus dans l'un quelconque des deux types ou plus de composites de substance active diffèrent en termes d'au moins une parmi la forme et la taille moyenne de particules des matériaux de carbone contenus dans un autre type de composites de substance active,
dans lequel le matériau de carbone est un nanotube de carbone, et sa forme est un type à emmêlement dans lequel des nanotubes de carbone sont emmêlés pour former une forme sphérique ou un type faisceau dans lequel des nanotubes de carbone sont alignés dans une direction prédéterminée pour former un écheveau de forme allongée, et
dans lequel les nanotubes de carbone présentant le type à emmêlement comprennent des particules présentant un rapport de forme de 1 à 2, et les nanotubes de carbone présentant le type faisceau comprennent des particules présentant un rapport de forme de plus de 2.

2. Substance active d'électrode positive pour la pile secondaire au lithium selon la revendication 1, dans lequel la substance active d'électrode positive contient deux types de composites de substance active, et les deux types de composites de substance active sont contenus selon un rapport de poids de 1 : 9 à 9 : 1.

3. Substance active d'électrode positive pour la pile secondaire au lithium selon la revendication 1, dans lequel la taille moyenne de particules du matériau de carbone est de 2 à 200 µm.

4. Substance active d'électrode positive pour la pile secondaire au lithium selon la revendication 2, dans lequel les matériaux de carbone contenus dans un quelconque type de composite de substance active de deux types de composites de substance active présentent une taille moyenne de particules de 5 à 40 µm et les matériaux de carbone contenus dans un autre type de composites de substance active présentent une taille moyenne de particules de 15 à 90 µm.

5. Substance active d'électrode positive pour une pile secondaire au lithium selon la revendication 2, dans lequel les matériaux de carbone contenus dans un quelconque type de composites de substance active de deux types de composites de substance active présentent une taille moyenne de particules de 5 µm ou plus à pas plus de 25 µm et les matériaux de carbone contenus dans un autre type de composites de substance active présentent une taille moyenne de particules de 25 µm ou plus à 90 µm ou moins.

6. Substance active d'électrode positive pour une pile secondaire au lithium selon la revendication 2, dans lequel la différence de taille moyenne de particules entre les matériaux de carbone contenus dans un quelconque type de composites de substance active de deux types de composites de substance active et les matériaux de carbone contenus dans un autre type de composites de substance active est de 5 à 65 µm.

7. Procédé de préparation d'une substance active d'électrode positive pour une pile secondaire au lithium comprenant les étapes consistant à :
(a) mélanger et faire réagir chacun de deux types ou plus de matériaux de carbone présentant au moins une parmi une forme et une taille moyenne de particules différente l'un de l'autre avec du soufre pour préparer deux types ou plus de composites de substance active dans lesquels du soufre est supporté sur chacun des matériaux de carbone ; et
(b) mélanger les deux types ou plus de composites de substance active préparés,
dans lequel le matériau de carbone est un nanotube de carbone, et sa forme est un type à emmêlement dans lequel des nanotubes de carbone sont emmêlés pour former une forme sphérique ou un type faisceau dans lequel des nanotubes de carbone sont alignés dans une direction prédéterminée pour former un écheveau de forme allongée, et
dans lequel les nanotubes de carbone présentant le type à emmêlement comprennent des particules présentant un rapport de forme de 1 à 2, et les nanotubes de carbone présentant le type faisceau comprennent des particules présentant un rapport de forme de plus de 2.

8. Procédé de préparation de la substance active d'électrode positive pour une pile secondaire au lithium selon la revendication 7, dans lequel le composite de substance active comprend deux types de composites de substance active, et les deux types de composites de substance active sont mélangés selon un rapport de poids de 1 : 9 à 9 : 1.

9. Procédé de préparation de la substance active d'électrode positive pour une pile secondaire au lithium selon la revendication 7, dans lequel la réaction est effectuée pendant 5 à 60 minutes à une température de 120 à 200 °C

10. Pile secondaire au lithium comprenant : l'électrode positive comprenant la substance active d'électrode positive pour la pile secondaire au lithium de la revendication 1 ; une électrode négative à base de lithium ; un électrolyte interposé entre l'électrode positive et l'électrode négative ; et un séparateur.

11. Pile secondaire au lithium selon la revendication 10, dans laquelle la pile secondaire au lithium est une pile au lithium-soufre.
